# EUROPÄISCHE PATENTANMELDUNG

(11) **EP 1 480 056 A1**
(43) Veröffentlichungstag der Anmeldung: **24.11.2004**
(21) Anmeldenummer: 03011648.7
(22) Anmeldetag: 22.05.2003
(51) Int. Cl.: G01S 15/50, G01S 15/58, G01S 7/52

(54) **Verfahren zur Bereichsüberwachung**

(71) Anmelder: Delphi Technologies, Inc., Troy, MI 48007 (US)
(72) Erfinder: Hell, Jürgen, 51429 Bergisch Gladbach (DE); Schmidt, Markus, 51766 Engelskirchen (DE)
(74) Vertreter: Manitz, Finsterwald & Partner GbR

(57) **Zusammenfassung**

Bei einem insbesondere für Kraftfahrzeuge vorgesehenen Verfahren zur Bereichsüberwachung werden mittels wenigstens eines Ultraschallsenders Ultraschallsignale in den zu überwachenden Bereich gesendet, mittels wenigstens eines Ultraschallempfängers reflektierte Ultraschallsignale empfangen und zur Erfassung von Objektbewegungen in dem zu überwachcnden Bereich die empfangenen reflektierten Ultraschallsignale mittels einer elektronischen Auswerteeinheit entsprechend ausgewertet. Hierbei werden die empfangenen reflektierten Ultraschallsignale mittels der elektronischen Auswerteeinheit einer Quadraturdemodulation unterworfen, wobei ausgehend von den empfangenen reflektierten Ultraschallsignalen durch eine entsprechend zeitversetzte Unterabtastung eine Rcalteilkomponente und eine dazu orthogonale Imaginärteilkomponente erzeugt, anhand dieser beiden orthogonalen Komponenten die jeweilige Phase der empfangenen reflektierten Ultraschallsignale ermittelt und zur Erfassung von Objektbewegungen in dem zu überwachenden Bereich Änderungen dieser Phase herangezogen werden.

## Beschreibung

Die Erfindung betrifft ein Verfahren zur Bereichsüberwachung, insbesondere für Kraftfahrzeuge, bei dem mittels wenigstens eines Ultraschallsenders Ultraschallsignale in den zu überwachenden Bereich gesendet, mittels wenigstens eines Ultraschallempfängers reflektierte Ultraschallsignale empfangen und zur Erfassung von Objektbewegungen in dem zu überwachenden Bereich die empfangenen reflektierten Ultraschallsignale mittels einer elektronischen Auswerteeinheit entsprechend ausgewertet werden. Sie betrifft ferner ein Ultraschall-Bereichsüberwachungssystem gemäß dem Oberbegriff des Anspruchs 10.

Kraftfahrzeug-Innenraumüberwachungssysteme, bei denen Ultraschallsignale ausgesendet und die empfangenen reflektierten Ultraschallsignale analysiert werden, sind bereits bekannt. Dabei sind bisher zwei Varianten vorgesehen. Zum einen werden Änderungen hinsichtlich reflektierter kurzer Ultraschallpulse erfasst, um auf eine eventuelle Änderung im Innenraum zu schließen. Zum anderen erfolgt eine Bewegungserfassung, indem ein kontinuierliches Signal ausgesendet und eventuelle Abwandlungen dieses Signals entsprechend analysiert werden.

Bei den bisher üblichen Ultraschall-Bewegungsdetektoren erfolgt gewöhnlich eine Amplitudendemodulation oder eine entsprechende Frequenzanalyse. Im Fall einer Amplitudendemodulation geht nun aber Information bezüglich der Bewegung verloren. Überdies können andere Vorgänge im Fahrzeug wie beispielsweise Vibrationen Signale hervorrufen, die den aufgrund von Bewegungen erhaltenen Signalen sehr ähnlich sind. Eine Frequenzanalyse erfordert ein leistungsfähiges Signalverarbeitungssystem. Bei einigen Systemen wird das ausgesendete Signal in die Nulllage gefaltet, was eine einfache Berechnung der Geschwindigkeit der Bewegung ermöglicht, jedoch einen Verlust an Information bezüglich der Richtung mit sich bringt.

Der Erfindung liegt die Aufgabe zugrunde, ein verbessertes Verfahren sowie ein verbessertes Ultraschall-Bereichsüberwachungssystem der eingangs genannten Art zu schaffen, bei denen die zuvor genannten Nachteile beseitigt sind.

Bezüglich des Verfahrens wird diese Aufgabe erfindungsgemäß dadurch gelöst, dass die empfangenen reflektierten Ultraschallsignale mittels der elektronischen Auswerteeinheit einer Quadraturdemodulation unterworfen werden, wobei ausgehenden von den empfangenen reflektierten Ultraschallsignalen durch eine entsprechend zeitversetzte Unterabtastung eine Realteilkomponente und eine dazu orthogonale Imaginärteilkomponente erzeugt, anhand dieser beiden orthogonalen Komponenten die jeweilige Phase der empfangenen reflektierten Ultraschallsignale ermittelt und zur Erfassung von Objektbewegungen in dem zu überwachenden Bereich Änderungen dieser Phase herangezogen werden.

Dabei wird vorzugsweise ein im Bereich der Betriebs- oder Trägerfrequenz der Ultraschallsignale liegendes Bandpasssignal digitalisiert und mittels einer Quadraturabwärtsmischung durch die zeitversetzte Unterabtastung in das Basisband versetzt. Zweckmäßigerweise wird die Abtastfrequenz zumindest doppelt so groß wie die Bandpass- bzw. Basisbandbreite gewählt.

Die Abtastfrequenz wird insbesondere um einen ganzzahligen Faktor kleiner als die Betriebs- oder Trägerfrequenz gewählt.

Gemäß einer bevorzugten praktischen Ausgestaltung des erfindungsgemäßen Verfahrens wird die Abtastfrequenz so gewählt, dass das Bandpasssignal in die Nulllage heruntergemischt wird, wodurch der Aufwand bezüglich getrennter Reflexionen mit und ohne Bewegung auf ein Minimum reduziert wird.

Änderungen der Phase der empfangenen reflektierten Ultraschallsignale können insbesondere auch zur Erfassung der Geschwindigkeit von Objektbewegungen herangezogen werden.

Alternativ oder zusätzlich können Änderungen der Phase der empfangenen reflektierten Ultraschallsignale auch zur Erfassung der Richtung von Objektbewegungen herangezogen werden.

Zur elektronischen Auswertung wird zweckmäßigerweise ein Mikrocontroller eingesetzt.

Das Verfahren kann insbesondere für eine Innenraumüberwachung ausgelegt sein.

Bezüglich des Ultraschall-Bereichsüberwachungssystems wird die eingangs genannte Aufgabe erfindungsgemäß dadurch gelöst, dass die elektronische Auswerteeinheit die empfangenen reflektierten Ultraschallsignale einer Quadraturdemodulation unterzieht, wobei ausgehenden von den empfangenen reflektierten Ultraschallsignalen durch eine entsprechend zeitversetzte Unterabtastung eine Realteilkomponente und eine dazu orthogonale Imaginärteilkomponente erzeugt, anhand dieser beiden orthogonalen Komponenten die jeweilige Phase der empfangenen reflektierten Ultraschallsignale ermittelt und zur Erfassung von Objektbewegungen in dem zu überwachenden Bereich Änderungen dieser Phase herangezogen werden.

Bevorzugte Ausführungsformen des erfindungsgemäßen Ultraschall-Bereichsüberwachungssystems sind in den Unteransprüchen angegeben.

Erfindungsgemäß werden zur Erfassung von Objektbewegungen also Änderungen der Phase des vom bewegten Objekt reflektierten Ultraschallsignals herangezogen, wobei sich das jeweilige Objekt zum Bewegungssensor hin oder von diesem weg bewegen kann. Dazu wird ein Quadraturdemodulator eingesetzt. Dieser kann auf sehr einfache Weise beispielsweise dadurch realisiert werden, dass das empfangene reflektierte Ultraschallsignal z. B. mittels eines Mikrocontrollers in geeigneter Weise abgetastet wird. Mit entsprechenden Abtastraten kann die Träger- oder Betriebsfrequenz des ausgesendeten Ultraschallsignals in die Nulllage reduziert werden, womit der Aufwand hinsichtlich getrennter Reflexionen mit und ohne Bewegung auf ein Minimum reduziert wird. Indem die Phase der reflektierten Ultraschallsignale auf entsprechende Änderungen hin überwacht wird, kann nicht nur die Geschwindigkeit der Objektbewegung, sondern auch die Bewegungsrichtung erfasst werden. Man erhält also beispielsweise ein Geschwindigkeitssignal mit Vorzeichen. Der Einsatz eines Quadraturdemodulators eröffnet überdies die Möglichkeit, die Amplitude des Ultraschallsignals zu berechnen.

Die Betriebsfrequenz kann beispielsweise bei 40 kHz liegen, während die Abtastfrequenz z. B. 4 kHz betragen kann. Grundsätzlich sind jedoch auch andere Frequenzwerte denkbar.

Die Erfindung wird im Folgenden anhand eines Ausführungsbeispiels unter Bezugnahme auf die Zeichnung näher erläutert.

Die einzige Figur der Zeichnung zeigt ein Prinzipschaltbild eines der I/Q-Komponentenbildung durch Abtastung dienenden Teils 10 der elektronischen Auswerteeinheit einer rein beispielhaften Ausführungsform eines Ultraschall-Bereichsüberwachungssystems.

Das betreffende, insbesondere für Kraftfahrzeuge vorgesehene Ultraschall-Bereichsüberwachungssystem kann überdies wenigstens einen Ultraschallsender zum Aussenden von Ultraschallsignalen in den zu überwachenden Bereich, und wenigstens einen Ultraschallempfänger für den Empfang von reflektierten Ultraschallsignalen umfassen. Die bereits erwähnte elektronische Auswerteeinheit dient der Erfassung von Objektbewegungen in dem zu überwachenden Bereich durch eine entsprechende Auswertung der empfangenen reflektierten Ultraschallsignale.

Dabei unterzieht die elektronische Auswerteeinheit die empfangenen reflektierten Ultraschallsignale einer Quadraturdemodulation, wobei ausgehend von den empfangenen reflektierten Ultraschallsignalen durch eine entsprechend zeitversetzte Unterabtastung eine Realteilkomponente xᵥ(n) und eine dazu orthogonale Imaginärteilkomponente xᵤ(n) erzeugt, anhand dieser beiden orthogonalen Komponenten xᵥ(n), xᵤ(n) die jeweilige Phase der empfangenen reflektierten Ultraschallsignale ermittelt und zur Erfassung von Objektbewegungen in dem zu überwachenden Bereich Änderungen dieser Phase herangezogen werden. Dabei wird ein im Bereich der Betriebs- oder Trägerfrequenz der Ultraschallsignale liegendes Bandpasssignal x(t) mittels einer Quadraturabwärtsmischung durch die zeitversetzte Unterabtastung in das Basisband versetzt.

Beim vorliegenden Ausführungsbeispiel wird das bandbegrenzte Eingangssignal oder Bandpasssignal x(t) mit der Bandbreite B mit zwei gegeneinander zeitversetzten Dirac-Stoßfolgen III(t), III(t-τ) multipliziert. Die am Ausgang der betreffenden Multiplizierer 12, 14 erhaltenen Signale xᵥ(t), xᵤ(t) werden jeweils einem Analog/Digital-Wandler 16, 18 zugeführt, die schließlich die beiden orthogonalen Komponenten xᵥ(n), xᵤ(n) liefern. Anhand dieser beiden orthogonalen Komponenten wird dann die jeweilige Phase der empfangenen reflektierten Ultraschallsignale ermittelt.

Die Verzögerungszeit τ wird so groß gewählt, dass der Phasenwinkel zwischen den beiden Ausgangssignalen xᵤ(t) und xᵥ(t) genau 90° wird.

Einer der beiden Delta-Kämme muss um ein Viertel der Abtastperiode verzögert werden, um ein entsprechendes analytisches Signal zu erhalten.

Die Abtastrate wird bezüglich der Träger- oder Bandpassmittenfrequenz vorzugsweise so gewählt, dass sich eine Faltung in die Nulllage ergibt.

Zur Erfassung von Objektbewegungen in dem zu überwachenden Bereich werden Änderungen der aus den beiden orthogonalen Komponenten xᵤ(n), xᵥ(n) ermittelten Phase herangezogen.

Die Abtastfrequenz ist vorzugsweise zumindest doppelt so groß wie die Bandpass- bzw. Basisbandbreite und um einen ganzzahligen Faktor kleiner als die Betriebs- oder Trägerfrequenz.

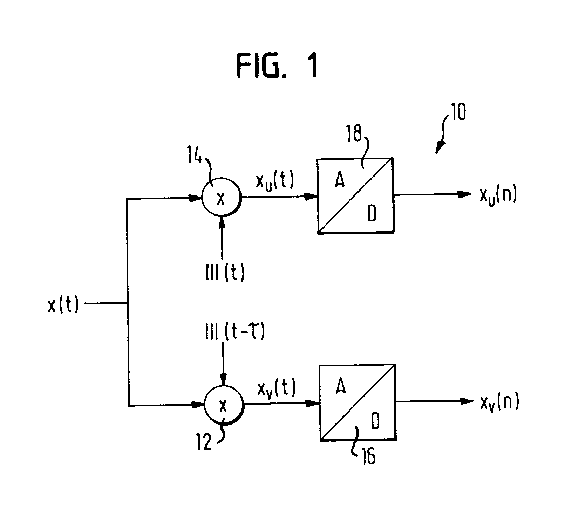

Die Änderungen der Phase der empfangenen reflektierten Ultraschallsignale können insbesondere auch zur Erfassung der Geschwindigkeit von Objektbewegungen und/oder zur Erfassung der Richtung von Objektbewegungen herangezogen werden. Die elektronische Auswerteeinheit kann beispielsweise einen Mikrocontroller umfassen, der dann insbesondere auch zur Durchführung der in der Fig. 1 angegebenen I/Q-Komponentenerzeugung durch Abtastung vorgesehen sein kann.

Die Träger- oder Betriebsfrequenz kann beispielsweise bei 40 kHz und die Abtastfrequenz z. B. bei 4 kHz liegen. Grundsätzlich sind jedoch auch beliebige andere Frequenzwerte denkbar.

Das betreffende Ultraschall-Bereichsüberwachungssystem kann insbesondere für eine Kraftfahrzeug-Innenraumüberwachung vorgesehen sein.

### Bezugszeichenliste

- 10: Teil der elektronischen Auswerteeinheit eines Ultraschall-Bereichsüberwachungssystems
- 12: Multiplizierer
- 14: Multiplizierer
- 16: Analog/ Digital-Wandler
- 18: Analog/ Digital-Wandler
- x(t): Bandpasssignal
- xᵤ(t): Ausgangssignal des Multiplizierers 14
- xᵤ(n): Imaginärteilkomponente
- xᵥ(t): Ausgangssignal des Mulitplizierers 12
- xᵥ(n): Realteilkomponente
- III(t): Dirac-Stoßfolge
- III(t-τ): zeitverzögerte Dirac-Stoßfolge

## Patentansprüche

1. Verfahren zur Bereichsüberwachung, insbesondere für Kraftfahrzeuge, bei dem mittels wenigstens eines Ultraschallsenders Ultraschallsignale in den zu überwachenden Bereich gesendet, mittels wenigstens eines Ultraschallempfängers reflektierte Ultraschallsignale empfangen und zur Erfassung von Objektbewegungen in dem zu überwachenden Bereich die empfangenen reflektierten Ultraschallsignale mittels einer elektronischen Auswerteeinheit entsprechend ausgewertet werden,
**dadurch gekennzeichnet,**
**dass** die empfangenen reflektierten Ultraschallsignale mittels der elektronischen Auswerteeinheit einer Quadraturdemodulation unterworfen werden, wobei ausgehenden von den empfangenen reflektierten Ultraschallsignalen durch eine entsprechend zeitversetzte Unterabtastung eine Realteilkomponente (xᵥ(n))und eine dazu orthogonale Imaginärteilkomponente (xᵤ(n)) erzeugt, anhand dieser beiden orthogonalen Komponenten (xᵥ(n), xᵤ(n)) die jeweilige Phase der empfangenen reflektierten Ultraschallsignale ermittelt und zur Erfassung von Objektbewegungen in dem zu überwachenden Bereich Änderungen dieser Phase herangezogen werden.

2. Verfahren nach Anspruch 1,
**dadurch gekennzeichnet,**
**dass** ein im Bereich der Betriebs- oder Trägerfrequenz der Ultraschallsignale liegendes Bandpasssignal digitalisiert und mittels einer Quadraturabwärtsmischung durch die zeitversetzte Unterabtastung in das Basisband (x(t)) versetzt wird.

3. Verfahren nach Anspruch 2,
**dadurch gekennzeichnet,**
**dass** die Abtastfrequenz zumindest doppelt so groß wie die Bandpass- bzw. Basisbandbreite gewählt wird.

4. Verfahren nach einem der vorhergehenden Ansprüche,
**dadurch gekennzeichnet,**
**dass** die Abtastfrequenz um einen ganzzahligen Faktor kleiner als die Betriebs- oder Trägerfrequenz gewählt wird.

5. Verfahren nach einem der vorhergehenden Ansprüche,
**dadurch gekennzeichnet,**
**dass** die Abtastfrequenz so gewählt wird, dass das Bandpasssignal (x(t)) in die Nulllage herunter gemischt wird.

6. Verfahren nach einem der vorhergehenden Ansprüche,
**dadurch gekennzeichnet,**
**dass** Änderungen der Phase der empfangenen reflektierten Ultraschallsignale zur Erfassung der Geschwindigkeit von Objektbewegungen herangezogen werden.

7. Verfahren nach einem der vorhergehenden Ansprüche,
**dadurch gekennzeichnet,**
**dass** Änderungen der Phase der empfangenen reflektierten Ultraschallsignale zur Erfassung der Richtung von Objektbewegungen herangezogen werden.

8. Verfahren nach einem der vorhergehenden Ansprüche
**dadurch gekennzeichnet,**
**dass** zur elektronischen Auswertung ein Mikrocontroller eingesetzt wird.

9. Verfahren nach einem der vorhergehenden Ansprüche
**dadurch gekennzeichnet,**
**dass** es für eine Innenraumüberwachung ausgelegt ist.

10. Ultraschall-Bereichsüberwachungssystem, insbesondere für Kraftfahrzeuge, mit wenigstens einem Ultraschallsender zum Aussenden von Ultraschallsignalen in den zu überwachenden Bereich, wenigstens einem Ultraschallempfänger für den Empfang von reflektierten Ultraschallsignalen und einer elektronischen Auswerteeinheit zur Erfassung von Objektbewegungen in dem zu überwachenden Bereich durch eine entsprechende Auswertung der empfangenen reflektierten Ultraschallsignale, insbesondere zur Durchführung des Verfahrens nach einem der vorhergehenden Ansprüche,
**dadurch gekennzeichnet,**
**dass** die elektronische Auswerteeinheit die empfangenen reflektierten Ultraschallsignale einer Quadraturdemodulation unterzieht, wobei ausgehenden von den empfangenen reflektierten Ultraschallsignalen durch eine entsprechend zeitversetzte Unterabtastung eine Realteilkomponente (xᵥ(n)) und eine dazu orthogonale Imaginärteilkomponente (xᵤ(n)) erzeugt, anhand dieser beiden orthogonalen Komponenten (xᵥ(n), xᵤ(n)) die jeweilige Phase der empfangenen reflektierten Ultraschallsignale ermittelt und zur Erfassung von Objektbewegungen in dem zu überwachenden Bereich Änderungen dieser Phase herangezogen werden.

11. Ultraschall-Bereichsüberwachungssystem nach Anspruch 10,
**dadurch gekennzeichnet,**
**dass** durch die elektronische Auswerteeinheit ein im Bereich der Betriebs- oder Trägerfrequenz der Ultraschallsignale liegendes Bandpasssignal (x(t)) digitalisiert und mittels einer Quadraturabwärtsmischung durch die zeitversetzte Unterabtastung in das Basisband versetzt wird.

12. Ultraschall-Bereichsüberwachungssystem nach Anspruch 11, **dadurch gekennzeichnet,**
**dass** die Abtastfrequenz zumindest doppelt so groß ist wie die Bandpass- bzw. Basisbandbreite.

13. Ultraschall-Bereichsüberwachungssystem nach einem der vorhergehenden Ansprüche,
**dadurch gekennzeichnet ,**
**dass** die Abtastfrequenz um einen ganzzahligen Faktor kleiner ist die Betriebs- oder Trägerfrequenz.

14. Ultraschall-Bereichsüberwachungssystem nach einem der vorhergehenden Ansprüche,
**dadurch gekennzeichnet,**
**dass** die Abtastfrequenz so gewählt ist, dass das Bandpasssignal (x(t)) in die Nulllage herunter gemischt wird.

15. Ultraschall-Bereichsüberwachungssystem nach einem der vorhergehenden Ansprüche,
**dadurch gekennzeichnet,**
**dass** die elektronische Auswerteeinheit Änderungen der Phase der empfangenen reflektierten Ultraschallsignale zur Erfassung der Geschwindigkeit von Objektbewegungen heranzieht.

16. Ultraschall-Bereichsüberwachungssystem nach einem der vorhergehenden Ansprüche,
**dadurch gekennzeichnet,**
**dass** die elektronische Auswerteeinheit Änderungen der Phase der empfangenen reflektierten Ultraschallsignale zur Erfassung der Richtung von Objektbewegungen heranzieht.

17. Ultraschall-Bereichsüberwachungssystem nach einem der vorhergehenden Ansprüche
**dadurch gekennzeichnet,**
**dass** die elektronische Auswerteeinheit einen Mikrocontroller umfasst.

18. Ultraschall-Bereichsüberwachungssystem nach einem der vorhergehenden Ansprüche
**dadurch gekennzeichnet,**
**dass** es für eine Innenraumüberwachung ausgelegt ist.
